# EUROPEAN PATENT APPLICATION

(11) **EP 2 241 958 A1**
(43) Date of publication of application: **20.10.2010**
(21) Application number: 10250757.1
(22) Date of filing: 12.04.2010
(51) Int. Cl.: G06F 3/041, G06F 3/01, G06F 3/033, G06F 3/048

(54) **Information processing apparatus, inclination detection method and inclination detection program**

(30) Priority: 16.04.2009 JP 2009100171
(71) Applicant: Sony Corporation, Tokyo 108-0075 (JP)
(72) Inventor: Miyazaki, Reiko, Tokyo 108-0075 (JP)
(74) Representative: Mills, Julia

(57) **Abstract**

Devices, methods, and non-transitory computer-readable media consistent with the invention may be used to detect an area of contact on a surface of the device by an external object. Then, an inclination of the device may be determined based on the detected area of contact.

## Description

This invention relates to the field of information processing apparatus, inclination detection methods and an inclination detection program and can be suitably applied, for example, to an information processing apparatus which has a touch panel.

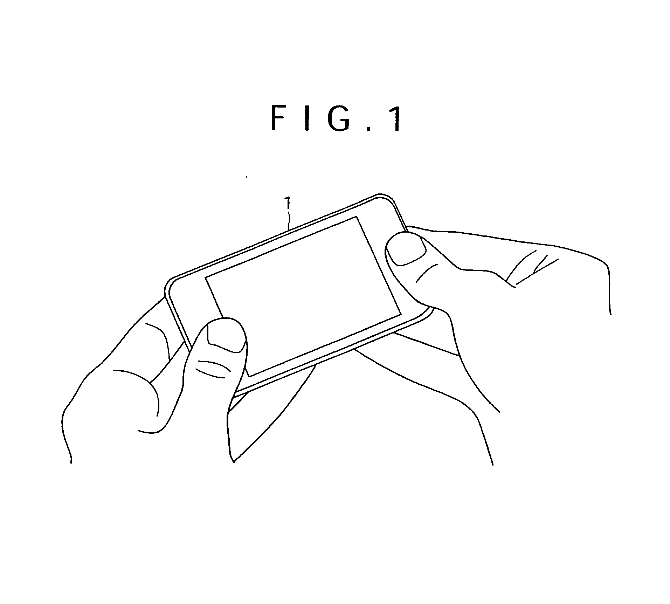

In recent years, an information processing apparatus like an information processing apparatus 1 shown in FIG. 1 wherein an instruction can be applied in various applications of games and so forth by a user inclining a housing of the information processing apparatus 1 has popularized.

As one of such information processing apparatus like the information processing apparatus 1, an information processing apparatus is disclosed, for example, in Japanese Patent Laid-Open No. 2002-207567 (referred to as Patent Document 1 hereinafter). In the information processing apparatus disclosed in Patent Document 1 mentioned, a sensor which detects force acting upon a physical solid to detect an inclination of a housing such as an acceleration sensor or a gyro sensor is used to detect the inclination of the housing, and various processes are carried out in response to the detected inclination. It is to be noted that the sensor of the type described is hereinafter referred to also as inclination detection sensor.

Incidentally, the information processing apparatus of Patent Document 1 described above cannot detect the inclination of the housing without using an inclination detection sensor.

Disclosed is an information processing apparatus, an inclination detection method and an inclination detection program wherein the inclination of a housing can be detected without using an inclination detection sensor.

Various respective aspects and features of the invention are defined in the appended claims. Combinations of features from the dependent claims may be combined with features of the independent claims as appropriate and not merely as explicitly set out in the claims.

Consistent with one embodiment, an apparatus for use in an inclinable device. The device may include a detector for determining an area of contact on a surface of the device by an object external to the device; a memory storing instructions for determining a change in inclination of the device, based on the area of contact; and one or more processors for executing the instructions.

Consistent with another embodiment a method for detecting a change in inclination of a device is disclosed. The method may include determining an area of contact on a surface of the device by an object external to the device; and determining the change in the inclination of the device based on the area of contact.

Consistent with another embodiment, there is provided a non-transitory computer-readable medium storing a set of instructions which, when executed by a processor, performs a method. The method may include determining an area of contact on a surface of a device by an object external to the device; and determining a change in the inclination of the device based on the area of contact.

In the information processing apparatus, when a user grasps the housing, the angle of a finger, which contacts the predetermined face of the housing, on the predetermined face can be detected. Then, since the angle varies as the housing is inclined, the inclination of the housing can be detected based on the variation of the angle.

With the information processing apparatus, when a user grasps the housing, the angle of the finger, which contacts the predetermined face of the housing, on the predetermined face can be detected. Then, since this angle varies as the housing is inclined, the inclination of the housing can be detected based on the variation of the angle. Thus, an information processing apparatus, an inclination detection method and an inclination detection program wherein the angle of the housing can be detected without using an inclination detection sensor can be implemented.

Embodiments of the invention will now be described with reference to the accompanying drawings, throughout which like parts are referred to by like references, and in which:
FIG. 1 is a schematic view illustrating an example of use of an information processing apparatus in the related art;
FIGS. 2A and 2B are a schematic perspective view and a block diagram showing an appearance and a general configuration of an information processing apparatus to which an embodiment of the present invention is applied, respectively;
FIGS. 3A and 3B are schematic front elevational views of the information processing apparatus of FIGS. 2A and 2B illustrating detection of an angle of a contacting physical solid;
FIGS. 4A to 4F are schematic front elevational views illustrating an inclination detection process consistent with a first embodiment;
FIGS. 5A and 5B are schematic front elevational views of the information processing apparatus of FIGS. 2A and 2B illustrating adjustment of the sound volume;
FIGS. 6A and 6B are schematic front elevational views of the information processing apparatus of FIGS. 2A and 2B illustrating changeover of an album to be selected;
FIGS. 7A and 7B are schematic front elevational views of the information processing apparatus of FIGS. 2A and 2B illustrating fast forward feeding or fast reverse feeding of dynamic pictures;
FIGS. 8A and 8B are schematic front elevational views of the information processing apparatus of FIGS. 2A and 2B illustrating scrolling of images;
FIG. 9 is a flow chart illustrating an inclination detection processing procedure according to the first embodiment;
FIG. 10 is a block diagram showing a functional configuration of the information processing apparatus of FIGS. 2A and 2B;
FIGS. 11A to 11F are schematic front elevational views of the information processing apparatus of FIGS. 2A and 2B illustrating an inclination detection process according to a second embodiment; and
FIG. 12 is a flow chart illustrating an inclination detection processing procedure according to the second embodiment.

In the following, embodiments consistent with the invention are described. It is to be noted that the description is given in the following order.
1. First Embodiment (example wherein the inclination of the housing is detected where the housing is grasped by both hands)
2. Second Embodiment (example wherein the inclination of the housing is detected where the housing is grasped by one hand)
3. Other Embodiments

### <1. First. Embodiment>

### [1-1. General Configuration of the Information Processing

### Apparatus]

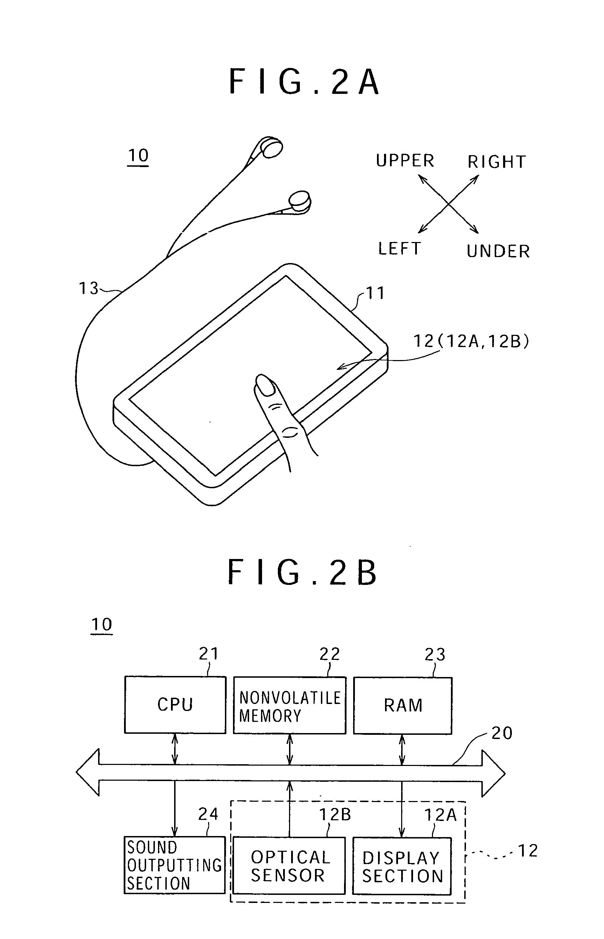

First, the first embodiment is described. Referring to FIGS. 2A and 2B, the information processing apparatus is generally denoted by reference numeral 10. The information processing apparatus 10 is of the portable type and has a housing 11 of a flattened rectangular shape of such a size that it can be grasped by one hand as seen in FIG. 2A, that is, of a palm size.

A touch panel 12 in the form of a rectangular plate is provided on the surface of the housing 11. The touch panel 12 is of the optical sensor type and includes a display section 12A and an optical sensor 12B. If the information processing apparatus 10 recognizes an operation of a user on a display face of the touch panel 12 thereof, then it carries out various processes in response to the operation.

It is to be noted that, since the housing 11 and the touch panel 12 are formed shorter in a first direction than in a second direction, the first direction is hereinafter referred to as lateral direction. Further, since the housing 11 and the touch panel 12 are formed longer in the second direction than in the first direction, the second direction is hereinafter referred to as longitudinal direction.

The information processing apparatus 10 is designed such that it is normally used in a horizontal posture in which the longitudinal direction of the information processing apparatus 10 coincides with the leftward and rightward direction by its user. Meanwhile, the direction of the information processing apparatus 10 where it is used in another posture wherein the longitudinal direction thereof coincides with the upward and downward direction is hereinafter referred to also as vertical direction.

A headphone terminal not shown is provided on a left face of the housing 11 such that a headphone 13 is connected to the housing 11 through the headphone terminal. The information processing apparatus 10 allows the user to enjoy sound of a reproduced musical composition or dynamic picture through the headphone 13.

Now, circuit components of the information processing apparatus 10 are described with reference to FIG. 2B. The information processing apparatus 10 includes several components connected to each other by a bus 20. A CPU (Central Processing Unit) 21 reads out a program stored in a nonvolatile memory 22 into a RAM (Random Access Memory) 23. Then, the CPU 21 develops the read out program on the RAM 23 and controls the other circuit components and executes various processes in accordance with the read out program.

If the CPU 21 is connected to an external apparatus through an external connection terminal not shown, then it can acquire music data, dynamic picture data or image data from the external apparatus and store the acquired data into the nonvolatile memory 22.

If the CPU 21 receives an instruction to reproduce a musical composition through a user operation, then it reads out the music data stored in the nonvolatile memory 22. Then, the CPU 21 carries out predetermined reproduction processes such as a decoding process and an amplification process for the music data to obtain a sound signal and sends the sound signal to a sound outputting section 24. Sound of the musical composition based on the sound signal is outputted from the sound outputting section 24 through the headphone 13.

A plurality of pixel sets are disposed, for example, in a matrix on a display face of the touch panel 12. Each of the pixel sets includes a display section 12A including light emitting elements for red display, green display and blue display, and an optical sensor 12B.

The CPU 21 causes the display sections 12A to display various menu screens and an image based on image data. For example, the CPU 21 reads out jacket photograph image data annexed to the music data stored in the nonvolatile memory 22 and causes the display sections 12A to display a jacket photograph image based on the jacket photograph image data.

The optical sensors 12B receive light incident to the display face of the touch panel 12, produce light intensity signals corresponding to intensities of the received light at predetermined intervals and send the light intensity signals to the CPU 21.

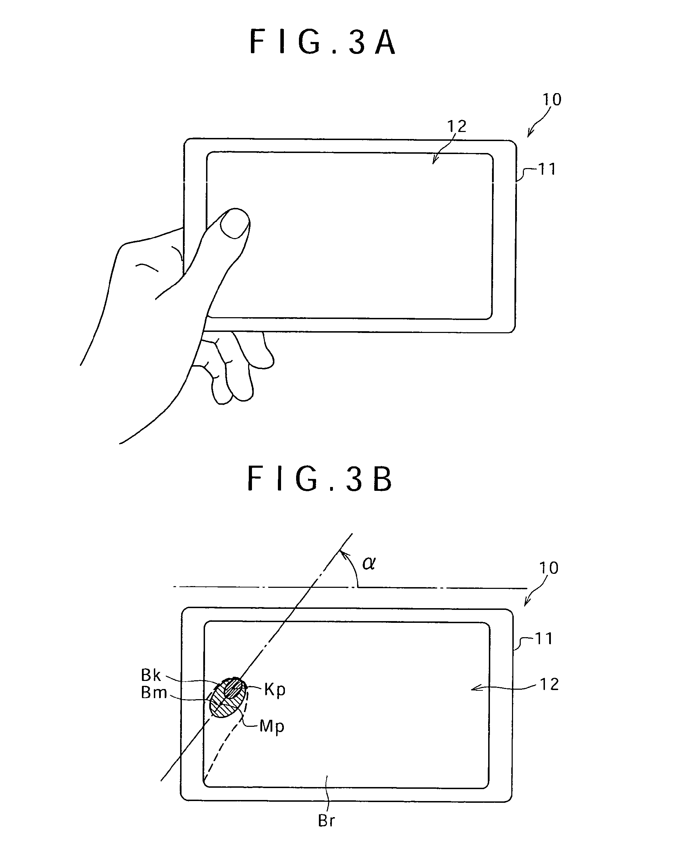

Here, it is assumed that the housing 11 is grasped by a hand such that a finger of the user touches the display face of the touch panel 12 as seen in FIG. 3A. In this instance, it can be estimated that the ball of the fingertip contacts the display face of the touch panel 12 and the other portion than the ball of the fingertip does not contact with the display face but is positioned in the proximity of the display face.

In this instance, in the region in which the finger of the user contacts the display face of the touch panel 12, since light directed to the display face is intercepted by the finger of the user, the intensity of light received by the optical sensors 12B decreases.

Meanwhile, in the region in which the finger of the user is positioned in the proximity of the display face of the touch panel 12, since a shadow of the finger of the user is formed, the intensity of light received by the optical sensors 12B decreases a little. However, the intensity of light is higher than that in the region in which the finger contacts the display face.

On the other hand, in a region in which the finger of the user does not contact nor is positioned in the proximity of the display face of the touch panel 12, light to be incident to the display face is not intercepted. Therefore, the intensity of light received by the optical sensors 12B in the region is higher than that in the region in which the finger contacts or is positioned in the proximity of the display face.

Taking this into consideration, the CPU 21 carries out a ternary coding process for the light intensity on the pixel sets based on the light intensity signals sent from the optical sensor 12B at the predetermined distances. The ternary coding process uses two predetermined threshold values set therefor, and the light intensities having various distributions are coded into three values of "-1," "0" and "1" with reference to the threshold values.

It is to be noted that the threshold values are set in advance so that the intensity of light in the region in which the finger contacts the display face of the touch panel 12 indicates "-1" while the light intensity in the region in which the finger is positioned in the proximity with the display face indicates "0" and the light intensity in the region in which the finger neither contacts nor is positioned in the proximity of the display face indicates "1."

The CPU 21 detects a region in which the light intensity is "-1" on the display face of the touch panel 12, that is, a dark region Bk, as coordinates on the display face as seen in FIG. 3B based on a result of the ternary coding process.

When the CPU 21 detects the dark region Bk, it recognizes that a physical solid, here, a finger of the user, contacts the display face of the touch panel 12. It is to be noted that the physical solid contacting the display face of the touch panel 12 as recognized by the CPU 21 is hereinafter referred to as contacting physical solid.

Then, the CPU 21 recognizes the shape of the dark region Bk as a shape of the portion at which the contacting physical solid contacts the display face of the touch panel 12. The CPU 21 can thereby recognize the shape of the ball of the fingertip of the finger which contacts the display face.

Further, the CPU 21 detects a region in which the light intensity on the display face of the touch panel 12 is "0," that is, an intermediate region Bm, as coordinates on the display screen based on a result of the ternary coding process.

If the CPU 21 detects the intermediate region Bm together with the dark region Bk, then it recognizes the shape of the intermediate region Bm as a shape of a portion at which the contacting physical solid is positioned in the proximity of the display face of the touch panel 12. Consequently, the CPU 21 can recognize the shape of a portion other than the ball of the fingertip of the finger which contacts the display face.

Furthermore, the CPU 21 detects a region in which the light intensity is "1" on the display face of the touch panel 12, that is, a bright region Br, as coordinates on the display face based on a result of the ternary coding process. The CPU 21 recognizes the bright region Br as a region in which the physical solid neither contacts nor is positioned in the proximity of the display face.

Then, the CPU 21 detects the center Kp of gravity (i.e., centroid) of the dark region Bk and the center Mp of gravity of the intermediate region Bm as coordinates on the display face of the touch panel 12 based on the coordinates of the dark region Bk and the intermediate region Bm.

Incidentally, the center Kp of gravity of the dark region Rk is positioned rather near to the fingertip side of the finger which contacts the display face of the touch panel 12 than the center Mp of gravity of the intermediate region Bm, and the center Mp of gravity of the intermediate region Bm is positioned rather near to a root portion of the finger than the center Kp of gravity of the dark region Bk.

Taking this into consideration, the CPU 21 calculates an angle defined by a direction in which the center Kp of gravity of the dark region Bk is positioned with respect to the center Mp of gravity of the intermediate region Bm and the longitudinal direction of the touch panel 12 as an angle α of the contacting physical solid on the display face of the touch panel 12.

Consequently, the CPU 21 can detect the angle defined by the direction in which the fingertip is positioned with respect to the root of the finger and the longitudinal direction on the display face of the touch panel 12 and can detect the angle of the finger which contacts the display face on the display face.

It is to be noted that the CPU 21 determines that, in a condition wherein the direction in which the center Kp of gravity is positioned with respect to the center Mp of gravity is a parallel direction to the longitudinal direction of the touch panel 12 and the center Kp of gravity is positioned on the right side with respect to the center Mp of gravity, the angle α of the contacting physical solid is zero degree, and the direction in which the center Kp of gravity moves in the counterclockwise direction is a positive direction. For example, the CPU 21 calculates that, in a state wherein the center Kp of gravity is just above the center Mp of gravity, the angle α of the contacting physical solid is 90 degrees.

### [1-2. Inclination Detection Process]

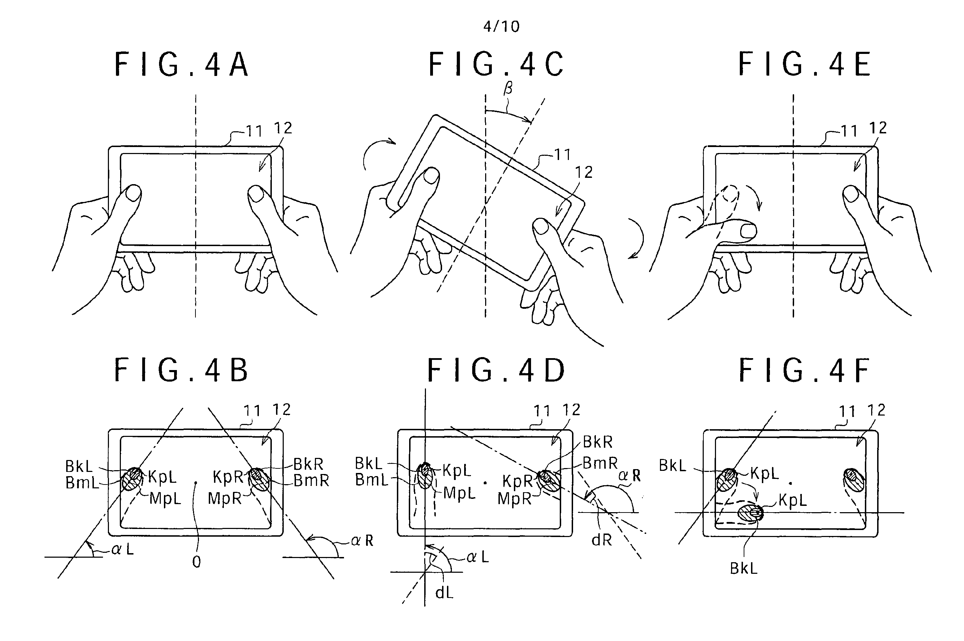

Now, an inclination detection process for detecting the inclination β (FIG. 4) of the housing 11 of the information processing apparatus 10 is described in detail.

The information processing apparatus 10 has an inclination detection mode in which the user can input a command by inclining the housing 11. If an operation of contacting left and right fingers with the display face of the touch panel 12 is carried out by the user, then the information processing apparatus 10 changes over the operation mode thereof into the inclination detection mode.

Here, it is assumed that the user carries out an operation for changing over the operation mode of the information processing apparatus 10 to the inclination detection mode. In other words, it is assumed that the user grasps the housing 11 in a horizontally directed state and contacts the display face of the touch panel 12 at left and right fingers as seen in FIG. 4A.

At this time, the CPU 21 carries out the ternary coding process described above based on the intensities of light received by the optical sensors 12B and detects a dark region Bk and an intermediate region Bm on the display face of the touch panel 12 as seen in FIG. 4B. Here, since the left and right fingers of the user contact the display face, two dark regions Bk and two intermediate regions Bm are detected.

The CPU 21 detects the center Kp of gravity of each of the dark regions Bk and decides whether or not one center Kp of gravity is found in each of a right region and a left region of the display face of the touch panel 12 into which the display face is divided with respect to the center O thereof.

If the CPU 21 decides that one center Kp of gravity is found in each of the right region and the left region of the display face of the touch panel 12, then it recognizes that a physical solid contacts each of the left and right sides of the display face.

It is to be noted that, in the following description, the center Kp of gravity of the left region of the display face of the touch panel 12 is referred to also as center KpL of gravity, and the dark region Bk, intermediate region Bm and center Mp of gravity of the intermediate region Bm corresponding to the center KpL of gravity are referred to also as dark region BkL, intermediate region BmL and center MpL of gravity, respectively. Meanwhile, the center Kp of gravity of the right region of the display screen is referred to also as center KpR of gravity, and the dark region Bk, intermediate region Bm and center Mp of gravity of the intermediate region Bm corresponding to the center KpR of gravity are referred to also as dark region BkR, intermediate region BmR and center MpR of gravity, respectively.

Further, in the following description, a physical solid which contacts the left region of the display face of the touch panel 12 is referred to also as left region contacting physical solid, and a physical solid which contacts the right region of the display face of the touch panel 12 is referred to also as right region contacting physical solid.

If the CPU 21 recognizes that a physical solid contacts each of the opposite left and right regions of the display face of the touch panel 12, then it recognizes that an operation for changing over the operation mode to the inclination detection mode has been carried out and changes over the operation mode of the information processing apparatus 10 to the inclination detection mode.

Then, the CPU 21 detects the center MpL of gravity of the intermediate region BmL and the center MpR of gravity of the intermediate region BmR.

Then, the CPU 21 calculates the angle αL of the left region contacting physical solid on the display face of the touch panel 12 based on the center KpL of gravity of the dark region BkL and the center MpL of gravity of the intermediate region BmL. Further, the CPU 21 calculates the angle αR of the right region conducting physical solid on the display face of the touch panel 12 based on the center KpR of gravity of the dark region BkR and the center MpR of gravity of the intermediate region BmR.

Consequently, the CPU 21 can detect the angles of the left finger and the angle of the right finger which currently contact the display face of the touch panel 12.

Incidentally, if the operation for changing over the operation mode of the information processing apparatus 10 to the inclination detection mode is carried out, then the CPU 21 recognizes that the user is going to incline the housing 11 and recognizes that the state at this point of time is a state wherein the housing 11 is not inclined, that is, a state wherein the inclination of the housing 11 is zero degree.

Therefore, the CPU 21 sets the angle αL of the left region contacting physical solid and the angle αR of the right region contacting physical solid at this time as a left region starting angle and a right region starting angle which are angles of contacting solids, respectively, when the operation of inclining the housing 11 is started. It is to be noted that the left region starting angle and the right region starting angle are collectively referred to as starting angles.

Further, the CPU 21 sets the center KpL of gravity of the dark region BkL and the center KpR of gravity of the dark region BkR at this time as a left finger starting gravity center and a right finger starting gravity center, respectively, when the operation of inclining the housing 11 is started. It is to be noted that the left finger starting gravity center and the right finger starting gravity center are collectively referred to also as starting gravity centers. In other words, the CPU 21 sets the center of gravity of a region in which the contacting physical solid which contacts the display face of the touch panel 12 in a state wherein the housing 11 is not inclined.

Here, it is assumed that the user inclines the housing 11, for example, in the clockwise direction as seen in FIG. 4C from a state wherein the user carries out an operation for changing over the operation mode of the information processing apparatus 10 to the inclination detection mode illustrated in FIG. 4A. When the user inclines the housing 11, it may possibly vary the angles of the left and right fingers around the centers of gravity of the fingertips of the left and right fingers, that is, of the portions of the fingertips contacting the display face of the touch panel 12 to incline the housing 11.

Taking this into consideration, the CPU 21 decides whether or not the angle α of each contacting physical solid has varied from its starting angle.

In particular, the CPU 21 carries out the ternary coding process based on the intensities of light received by the optical sensors 12B to detect the dark regions BkL and BkR and the intermediate regions BmL and BmR on the display face of the touch panel 12 as seen in FIG. 4D.

Then, the CPU 21 calculates the angle αL of the left region contacting physical solid and the angle αR of the left region contacting physical solid as described hereinabove.

Then, the CPU 21 calculates the difference dL between the left region starting angle and the angle αL of the left region contacting physical solid. Further, the CPU 21 calculates the difference dR between the right region starting angle and the angle αR of the right region contacting physical solid. The CPU 21 decides based on a result of the calculation whether or not the angle αL of the left region contacting physical solid and the angle αR of the right region contacting physical solid have varied.

Then, if the CPU 21 decides that one or both of the angle αL of the left region contacting physical solid and the angle αR of the right region contacting physical solid have changed, then it decides that the angle α of a contacting physical solid has changed.

Incidentally, also it is estimated that the user may carry out an operation of varying the angle, for example, of the left finger while the housing 11 is not inclined as seen in FIG. 4E.

In this instance, since the user varies the angle of the left finger around the root of the finger, different from the case wherein the housing 11 is inclined, the center of gravity of the ball of the fingertip, that is, the region in which the finger contacts the display face of the touch panel 12, moves. In other words, as seen in FIG. 4F, the center KpL of gravity of the dark region BkL moves as the angle αL of the left region contacting physical solid varies.

Accordingly, even if the angle α of the contacting physical solid varies, if the center Kp of gravity of the dark region Bk moves, then it is considered that the housing 11 is not inclined. On the other hand, if the angle α of the contacting physical solid varies and besides the center Kp of gravity of the dark region Bk does not move, then it is considered that the housing 11 is inclined.

Taking this into consideration, if the CPU 21 decides that the angle α of a contacting physical solid has varied, then it decides whether or not the center Kp of gravity of the dark region Bk has moved from the state wherein the operation mode was changed over to the inclination detection mode.

In particular, the CPU 21 calculates the distance between the left finger starting gravity center and the center KpL of gravity and the distance between the right finger starting gravity center and the center KpR of gravity and decides based on a result of the calculation that, if the distances are greater than a predetermined threshold value, then the center Kp of gravity has moved.

It is to be noted that, when the user inclines the housing 11, the center Kp of gravity may possibly move a little. Accordingly, the threshold value is set to such a degree that movement of the center Kp of gravity when the user inclines the housing 11 and movement of the center Kp of gravity when the housing 11 varies the angle of a finger without inclining the housing 11 can be distinguished from each other.

If the CPU 21 decides that the angle α of the contacting physical solid has varied and the center Kp of gravity of the dark region Bk has not moved, then it recognizes that the housing 11 is in an inclined state. Meanwhile, if the CPU 21 decides that the angle α of the contacting physical solid has changed and besides the center Kp of gravity of the dark region Bk has moved, then it recognizes that the housing 11 is not in an inclined state.

Incidentally, when the user inclines the housing 11, from between the left and right fingers which grip the housing 11, that finger which exhibits a greater variation in angle reflects the variation of the inclination of the housing 11 accurately.

Taking this into consideration, the CPU 21 compares the difference dL between the left region starting angle and the angle αL of the left region contacting physical solid and the difference dR between the right region starting angle and the angle αR of the right region contacting physical solid with each other to decide which one of the difference dL and the difference dR is greater.

Then, the CPU 21 estimates the greater difference as a variation amount of the inclination of the housing 11 from that in the state wherein the inclination of the housing 11 is zero degree, that is, in the state when the mode is changed over to the inclination detection mode, and detects the greater difference as the inclination β of the housing 11. For example, in the case of FIG. 4D, since the difference dL is greater than the difference dR, the CPU 21 detects the difference dL as the inclination β of the housing 11.

It is to be noted that the CPU 21 detects the counterclockwise direction as a positive direction of the angle α of a contacting physical solid. Therefore, that the angle α of a contacting physical solid varies in the positive direction signifies that the housing 11 is inclined in the negative direction, that is, in the clockwise direction.

Accordingly, the CPU 21 detects a positive inclination β where the housing 11 is inclined in the clockwise direction, but detects a negative inclination β where the housing 11 is inclined in the counterclockwise direction. For example, where the housing 11 is inclined by 45 degrees in the clockwise direction, the CPU 21 detects that the inclination β is +45 degrees.

Then, the CPU 21 executes a predetermined process in response to the detected inclination β in various applications.

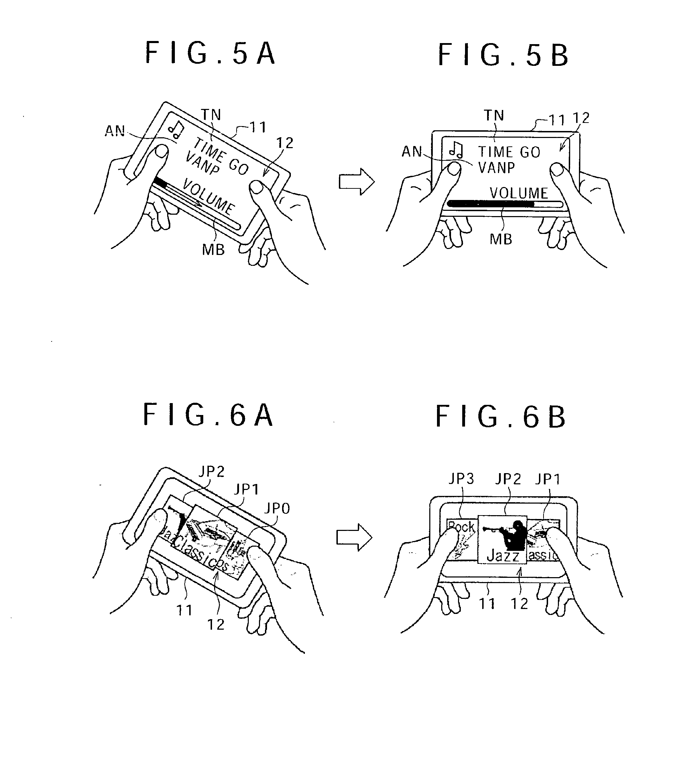

In particular, the CPU 21 starts up, for example, an application for reproducing a musical composition and is reproducing a musical composition. At this time, the CPU 21 controls the touch panel 12 to display a title name TN and an artist name AN of the musical composition being reproduced and a sound volume bar MB indicative of the volume of sound being outputted as seen in FIG. 5A. The sound volume bar MB represents a magnitude of the sound volume with a length of a painted over range.

Here, it is assumed that, when the CPU 21 is in the inclination detection mode, the user inclines the housing 11, for example, in the clockwise direction. At this time, the CPU 21 detects a positive inclination β as described hereinabove. Then, the CPU 21 controls the sound outputting section 24 in response to the positive inclination β to raise the volume of sound to be outputted and controls the touch panel 12 to display the sound volume bar MB so that the range within which it is to be covered over is extended from the left toward the right.

On the other hand, if the inclination β is in the negative, then the CPU 21 controls the sound outputting section 24 to lower the volume of the sound to be outputted and controls the touch panel 12 to display the sound volume bar MB so that the range to be painted over is contracted from the right to the left. It is to be noted that the CPU 21 controls the sound outputting section 24 such that, as the absolute value of the inclination β increases, the adjustment amount of the sound volume increases, but as the absolute value of the inclination β decreases, the adjustment amount of the sound volume decreases.

Further, the CPU 21 continuously carries out the adjustment of the sound volume in accordance with the inclination β while the user continues to incline the housing 11.

Here, it is assumed that the user returns the inclination of the housing 11 to its original state, that is, to the state wherein the changeover to the inclination detection mode was carried out, as seen in FIG. 5B. At this time, the CPU 21 recognizes that the housing 11 is not inclined, and stops the adjustment of the sound volume.

Further, it is assumed that, while the application for reproducing a musical component is operating, the CPU 21 controls the touch panel 12 to display, for example, a screen image for selecting an album to be reproduced. In this instance, the CPU 21 controls the touch panel 12 to display jacket photograph images JP, that is, JP0 to JP2, of a plurality of albums in a juxtaposed relationship from the right to the left as seen in FIG. 6A. At this time, the CPU 21 is in a state wherein it selects an album corresponding to the jacket photograph image JP1 displayed at the center of the touch panel 12.

Here, it is assumed that, when the CPU 21 is in the inclination detection mode, the user inclines the housing 11, for example, in the clockwise direction. At this time, the CPU 21 detects a positive inclination β as described hereinabove.

Then, if the CPU 21 recognizes that the detected inclination β is in the positive and the absolute value of the inclination β is higher than the predetermined value, then it causes the jacket photograph images JP displayed on the touch panel 12 to be scrolled from the left to the right as seen in FIG. 6B to change over the album to be selected to a next album. At this time, the CPU 21 causes the jacket photograph image JP2 corresponding to the selected album to be displayed at the center and causes the jacket photograph images JP3 and JP1 to be displayed on the left and right of the jacket photograph image JP2, respectively.

On the other hand, if the inclination β is in the negative and the absolute value of the inclination β is higher than the predetermined value, then the CPU 21 controls the touch panel 12 to display the jacket photograph images JP to be displayed on the touch panel 12 so that they are scrolled from the right to the left to change over the album to be selected back to the preceding album.

Further, while the user continues to incline the housing 11, the CPU 21 carries out the changeover of the album in accordance with the inclination β continuously. Then, if the user returns the inclination of the housing 11 to its original state as seen in FIG. 6B, then the CPU 21 recognizes that the housing 11 is not inclined and stops the changeover of an album to be selected.

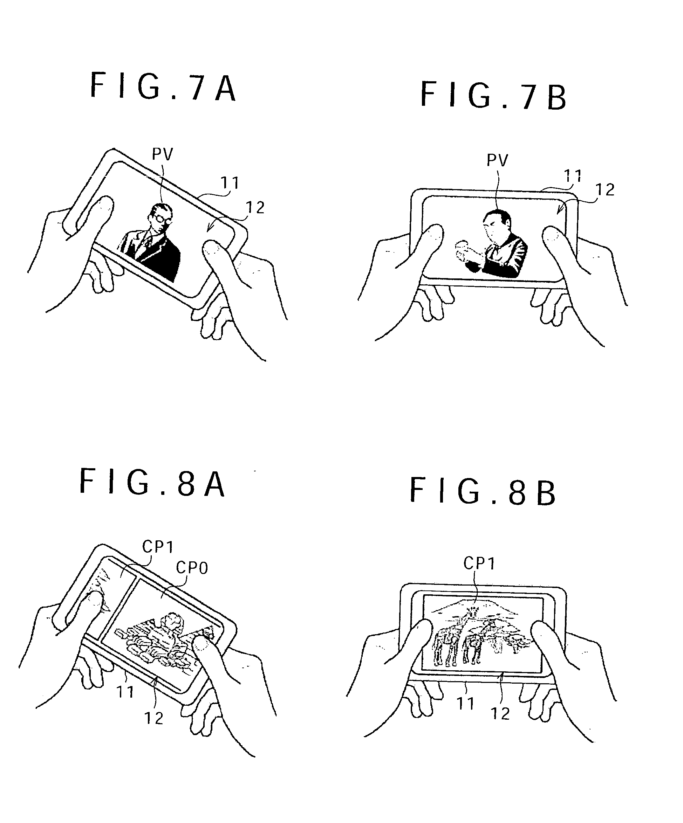

Meanwhile, it is assumed that the CPU 21 has started up an application, for example, for reproduction of a dynamic picture and is reproducing a dynamic picture. At this time, the CPU 21 controls the touch panel 12 to display the dynamic picture PV being reproduced as seen in FIG. 7A.

Here, it is assumed that, while the CPU 21 is in the inclination detection mode, the user inclines the housing 11, for example, in the clockwise direction. At this time, the CPU 21 detects a positive inclination β as described hereinabove. Then, the CPU 21 carries out fast forward reproduction of the dynamic picture PV in response to the positive inclination β.

On the other hand, if the CPU 21 recognizes that the detected inclination β is in the negative, then it causes the dynamic picture PV to be displayed by fast reverse reproduction. It is to be noted that the CPU 21 controls the touch panel 12 to display the dynamic picture PV such that, as the absolute value of the inclination β increases, the speed of fast forward reproduction or fast reverse reproduction increases, but as the absolute value of the inclination β decreases, the speed of fast forward reproduction or fast reverse reproduction of the dynamic picture PV decreases.

Further, while the user continues to incline the housing 11, the housing 11 continuously carries out fast forward reproduction or fast reverse reproduction of the dynamic picture PV in accordance with the inclination β. Then, if the user returns the inclination of the housing 11 to its original state as seen in FIG. 7B, then the CPU 21 recognizes that the housing 11 is not inclined and stops the fast forward reproduction or fast reverse reproduction of the dynamic picture PV being currently reproduced.

Further, it is assumed that the CPU 21 has started up, for example, an application for accessing an image and images CP, that is, CP0 and CP1, are displayed in a juxtaposed relationship from the right to the left on the touch panel 12 as seen in FIG. 8A.

Here, it is assumed that, while the information processing apparatus 10 is in the inclination detection mode, the user inclines the housing 11, for example, in the clockwise direction. At this time, the CPU 21 detects a positive inclination β as described hereinabove. Then, the CPU 21 controls the touch panel 12 to display the images CP such that they are scrolled from the left to the right in response to the positive inclination β.

On the other hand, when the inclination β is in the negative, the CPU 21 causes the images CP to be scrolled from the right to the left. It is to be noted that the CPU 21 controls the touch panel 12 such that, as the absolute value of the inclination β increases, the scrolling speed of the images CP increases, but as the absolute value of the inclination β decreases, the scrolling speed of the images CP decreases.

Further, the CPU 21 carries out scrolling of the images CP in accordance with the inclination β continuously while the user continues to incline the housing 11. Then, if the user returns the inclination of the housing 11 to its original state as seen in FIG. 8B, then the CPU 21 recognizes that the housing 11 is not inclined and stops the scrolling of the images CP.

In this manner, the CPU 21 executes a predetermined process in response to the detected inclination β in various applications.

### [1-3. Inclination Detection Processing Procedure]

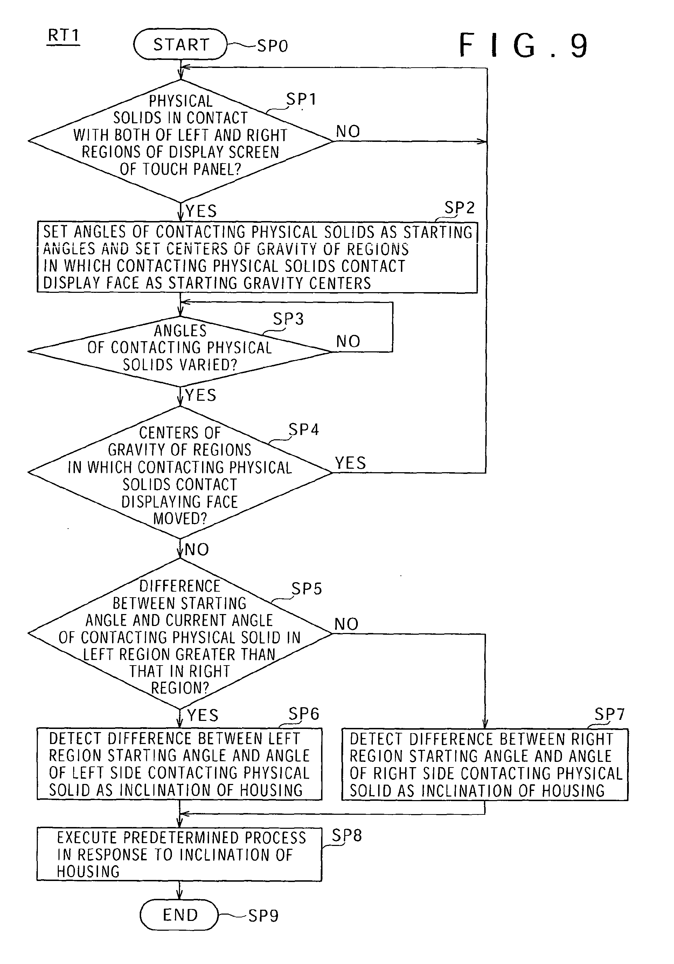

Now, an operation processing procedure in the inclination detection process of the information processing apparatus 10 described above, that is, an inclination detection processing procedure RT1 is described in detail with reference to a flow chart shown in FIG. 9. Incidentally, the inclination detection processing procedure RT1 is executed in accordance with a program installed in the nonvolatile memory 22 by the CPU 21.

If an application is started up, then the CPU 21 starts the inclination detection processing procedure RT1 beginning with step SP0 and advances its processing to next step SP1.

At step SP1, the CPU 21 detects dark regions Bk and intermediate regions Bm on the display face of the touch panel 12 based on the intensity of light received by the optical sensors 12B. Then, the CPU 21 detects the center Kp of gravity of the dark regions Bk and decides based on the detected centers Kp of gravity whether or not a physical solid contacts each of the opposite left and right regions of the display face.

If a negative result is obtained at step SP1, then this signifies that an operation for changing over the operation mode of the information processing apparatus 10 to the motion detection mode is not carried out by the user. At this time, the CPU 21 advances the processing to step SP1 thereby to wait that a physical solid is brought into contact each of the left and right regions of the display face of the touch panel 12.

On the other hand, if an affirmative result is obtained at step SP1 because a physical solid contacts each of the opposite left and right regions of the display face of the touch panel 12, then this signifies that an operation for changing over the operation mode of the information processing apparatus 10 to the inclination detection mode is carried out by the user. At this time, the CPU 21 advances the processing to step SP2.

At step SP2, the CPU 21 changes over the operation mode of the information processing apparatus 10 to the inclination detection mode and detects the center Mp of gravity of the intermediate regions Bm. Then, the CPU 21 calculates the angle αL of the left region contacting physical solid and the angle αR of the right region contacting physical solid based on the centers Kp of gravity of the dark regions Bk and the centers Mp of gravity of the intermediate regions Bm and sets the angles αL and αR as a left region starting angle and a right region starting angle, respectively.

Further, the CPU 21 sets the centers Kp of gravity of the dark regions Bk at this time, that is, the centers of gravity of regions in which the contacting physical solids contact the display face of the touch panel 12, as the starting centers of gravity. Then, the CPU 21 advances the processing to step SP3.

At step SP3, the CPU 21 decides based on the intensity of light received by the optical sensors 12B whether or not the angle α of each contacting physical solid has changed.

In particular, the CPU 21 calculates the angle αL of the left region contacting physical solid and the angle αR of the right region contacting physical solid. Then, the CPU 21 calculates the difference dL between the left region starting angle and the angle αL of the left region contacting physical solid and the difference dR between the right region starting angle and the angle αR of the right region contacting physical solid. Then, the CPU 21 decides based on a result of the calculation whether or not the angle α of each contacting physical solid has varied.

If a negative result is obtained at step SP3, then this signifies that the user does not change the angle of the fingers nor inclines the housing 11. At this time, the CPU 21 returns the processing to step SP3, at which it stands by until the angle α of the contacting physical solids varies.

On the other hand, if an affirmative result is obtained at step SP3, then this signifies that the user has varied the angle of the fingers, and at this time, the CPU 21 advances the processing to step SP4.

At step SP4, the CPU 21 calculates the distance between the starting gravity center and the center Kp of gravity of the dark region Bk and decides based on a result of the calculation whether or not the center of gravity of the region in which the contacting physical solid is in contact with the display face of the touch panel 12 has moved.

If an affirmative result is obtained at step SP4, then this signifies that the user does not incline the housing 11 although it has varied the angle of the fingers. At this time, the CPU 21 cancels the inclination detection mode and returns the processing to step SP1, at which it stands by until a physical solid is brought into contact with each of the left and right regions of the display face of the touch panel 12 again.

On the other hand, if a negative result is obtained at step SP4, then this signifies that the user has inclined the housing 11, and at this time, the CPU 21 advances the processing to step SP5.

At step SP5, the CPU 21 compares the difference dL between the left region starting angle and the angle αL of the left region contacting physical solid and the difference dR between the right region starting angle and the angle αR of the right region contacting physical solid with each other to decide whether or not the difference dL is greater than the difference dR.

If an affirmative result is obtained at this step SP5 because the difference dL is equal to or greater than the difference dR, then this signifies that the difference dL accurately reflects the variation of the inclination of the housing 11. At this time, the CPU 21 advances the processing to step SP6.

At step SP6, the CPU 21 detects the difference dL between the left region starting angle and the angle αL of the left region contacting physical solid as the inclination β of the housing 11. Then, the CPU 21 advances the processing to step SP8.

On the other hand, if a negative result is obtained at step SP5 because the difference dL is smaller than the difference dR, then this signifies that the different dR accurately reflects the variation of the inclination of the housing 11. At this time, the CPU 21 advances the processing to step SP7.

At step SP7, the CPU 21 detects the difference dR between the right region starting angle and the angle αR of the right region contacting physical solid as the inclination β of the housing 11, and then the CPU 21 advances the processing to step SP8.

At step SP8, the CPU 21 executes a predetermined process in accordance with the inclination β of the housing 11. Then, the CPU 21 advances the processing to step SP9, at which it ends the inclination detection processing procedure RT1.

The CPU 21 detects the inclination β of the housing 11 in accordance with the inclination detection processing procedure RT1 as described above.

### [1-4. Operation and Effect of the First Embodiment]

In the configuration described above, the information processing apparatus 10 recognizes the shape of a left region contacting physical solid and a right region contacting physical solid, which contact the display face of the touch panel 12 provided on the surface of the housing 11, based on the intensity of light received by the optical sensors 12B.

Then, the information processing apparatus 10 calculates the angle αL of the left region contacting physical solid on the display face of the touch panel 12 based on the shape of the left region contacting physical solid and detects the angle αR of the right region contacting physical solid on the display face of the touch panel 12 based on the shape of the right region contacting physical solid.

Consequently, the information processing apparatus 10 can detect the angle of the left finger and the angle of the right finger which contact the display face of the touch panel 12 when the user grasps the housing 11.

Further, if the information processing apparatus 10 recognizes that a physical solid contacts the left and right regions of the display face of the touch panel 12, then it recognizes that the user is going to incline the housing 11. Then, with reference to the angle αL of the left region contacting physical solid and the angle αR of the right region contacting physical solid at this time, the variation of the angle αL of the left region contacting physical solid and the variation of the angle αR of the right region contacting physical solid are calculated.

Then, the information processing apparatus 10 detects, from between the variation of the angle αL of the left region contacting physical solid and the variation of the angle αR of the right region contacting physical solid, shat variation which exhibits a greater variation amount as the inclination β of the housing 11.

Consequently, the information processing apparatus 10 can detect the variation of the angle of the fingers griping the housing 11 from the point of time at which the user begins to incline the housing 11. Since this angle varies in response to inclining of the housing 11, the inclination β of the housing 11 can be detected accurately based on the variation of the angle.

Further, the information processing apparatus 10 can detect the variation of the finger, which accurately reflects the variation of the inclination of the housing 11, as the inclination β of the housing 11 by detecting the angle of the finger which indicates the greater variation as the inclination β of the housing 11. Consequently, the inclination β of the housing 11 can be detected further accurately.

Furthermore, the information processing apparatus 10 detects, based on the shape of the contacting physical solid, the center of gravity of a region in which the contacting physical solid contacts the display face of the touch panel 12 and decides whether or not the center of gravity has changed together with the variation of the angle α of the contacting physical solid.

Then, when the information processing apparatus 10 decides that the center of gravity has not moved together with the variation of the angle α of the contacting physical solid, it recognizes that the housing 11 is inclined, and detects the inclination β of the housing 11 based on the variation of the angle α of the contacting physical solid.

Consequently, when the user carries out an operation for varying the angle of the finger without inclining the housing 11 such as, for example, a dragging operation, the information processing apparatus 10 is prevented from recognizing in error that the housing 11 is inclined.

Incidentally, where an inclination detection sensor such as, for example, a gyro sensor is used, even if the user unintentionally inclines the housing 11, the inclination β of the housing 11 may be detected and a process in accordance with the inclination β may be executed.

In contrast, when the information processing apparatus 10 recognizes that a physical solid contacts each of the opposite left and right regions of the display face of the touch panel 12, it changes over the operation mode of the information processing apparatus 10 to the inclination detection mode, in which it detects the inclination β of the housing 11 and executes various processes in response to the inclination β.

Consequently, the information processing apparatus 10 can execute a process in accordance with the inclination β of the housing 11 when the user touches with the fingers thereof the opposite left and right regions of the display face of the touch panel 12 as an operation for changing over the operation mode of the information processing apparatus 10 to the inclination detection mode. As a result, the information processing apparatus 10 can prevent execution of a process in accordance with the inclination β whose execution is not intended by the user.

Further, since the information processing apparatus 10 does not execute a process in accordance with the inclination β when the user inclines the housing 11 unintentionally, even a process whose execution is dangerous without an intention of the user such as adjustment of the sound volume can be allocated as a process to be executed in accordance with the inclination β.

Further, where an inclination detection sensor is used, in order to prevent execution of a process in accordance with the inclination β when the user inclines the housing 11 unintentionally, it is a possible idea to execute a process in accordance with the inclination β when a predetermined button is depressed, when setting is carried out on a menu screen or in a like case.

However, with the method just described, the process in accordance with the inclination β may not be executed if the user does not carry out a cumbersome operation such as to depress the predetermined button or to carry out setting on the menu screen.

In contrast, the information processing apparatus 10 can execute a process in accordance with the inclination β of the housing 11 by causing the user to carry out a simple operation of touching with the fingers thereof the opposite left and right regions of the display screen of the touch panel 12.

Further, with the information processing apparatus 10, since the CPU 21 can detect the inclination β of the housing 11 using a result of detection of the touch panel 12, the inclination β of the housing 11 can be detected with a simpler configuration than that where a gyro sensor is used separately.

With the configuration described above, the information processing apparatus 10 recognizes the shape of a physical solid contacting the display face of the touch panel 12 and detects the angle α of the contacting physical solid on the display face based on the recognized shape of the contacting physical solid. Then, the information processing apparatus 10 detects the inclination β of the housing 11 based on a variation of the angle α of the contacting physical solid.

Consequently, the information processing apparatus 10 can detect the angle of a finger contacting the display face of the touch panel 12 when the user grasps the housing 11. Since the angle of the finger varies in response to inclining movement of the housing 11, the inclination β of the housing 11 can be detected based on the variation of the angle. Thus, the information processing apparatus 10 can detect the inclination β of the housing 11 without using an inclination detection sensor.

### [1-5. Functional Configuration of the First Embodiment]

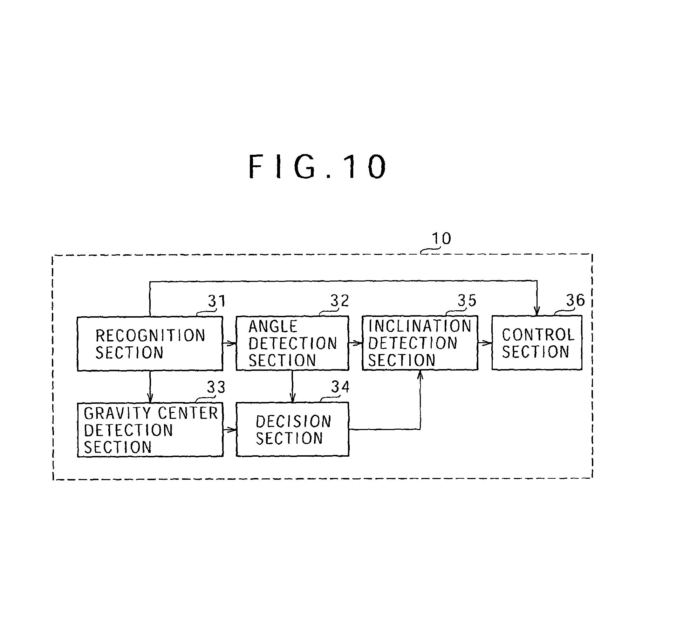

Here, a functional configuration of the information processing apparatus 10 principally for the inclination detection process described above is described. Referring to FIG. 10, the information processing apparatus 10 functions as a recognition section 31, an angle detection section 32, a gravity center detection section 33, a decision section 34, an inclination detection section 35 and a control section 36.

In the information processing apparatus 10, the optical sensors 12B and the CPU 21 described hereinabove function as the recognition section 31. The recognition section 31 recognizes the shape of a physical solid contacting a predetermined face of the housing 11 of the information processing apparatus 10, in the present embodiment, with the display face of the touch panel 12 provided on the surface of the housing 11.

Further, in the information processing apparatus 10, the CPU 21 described hereinabove functions as the angle detection section 32. The angle detection section 32 detects the angle of the physical solid on the predetermined face based on the shape of the physical solid recognized by the recognition section 31.

Further, in the information processing apparatus 10, the CPU 21 described hereinabove functions as the gravity center detection section 33. The gravity center detection section 33 detects the center of gravity of a portion of the physical solid contacting the predetermined face based on the shape of the physical solid recognized by the recognition section 31.

Furthermore, in the information processing apparatus 10, the CPU 21 described hereinabove functions as the decision section 34. The decision section 34 decides whether or not the center of gravity detected by the gravity center detection section 33 has moved together with the variation of the angle of the physical solid detected by the angle detection section 32.

Further, in the information processing apparatus 10, the CPU 21 described hereinabove functions as the inclination detection section 35. The inclination detection section 35 detects, when it is decided by the decision section 34 that the center of gravity has not moved together with the variation of the angle of the physical solid, the inclination of the housing 11 based on the variation of the angle of the physical solid.

Further, in the information processing apparatus 10, the CPU 21 described hereinabove functions as the control section 36. The control section 36 executes a predetermined process in response to the inclination of the housing 11 detected by the inclination detection section 35 when the shape of a plurality of physical solids is recognized by the recognition section 31.

With such a functional configuration as described above, the information processing apparatus 10 can functionally implement the inclination detection process described above.

### <2. Second Embodiment>

Now, the second embodiment of is described. The present second embodiment is similar to the first embodiment described hereinabove except that the inclination detection process of the information processing apparatus 10 is different. Therefore, overlapping description of the configuration of the information processing apparatus 10 shown in FIGS. 2A and 2B is omitted herein to avoid redundancy.

### [2-1. Inclination Detection Process]

In the following, the inclination detection process in the second embodiment is described in detail. The information processing apparatus 10 executes the inclination detection process when an application is started up. Further, although the information processing apparatus 10 is normally utilized in the horizontally directed state, it can be utilized also in the vertically directed direction.

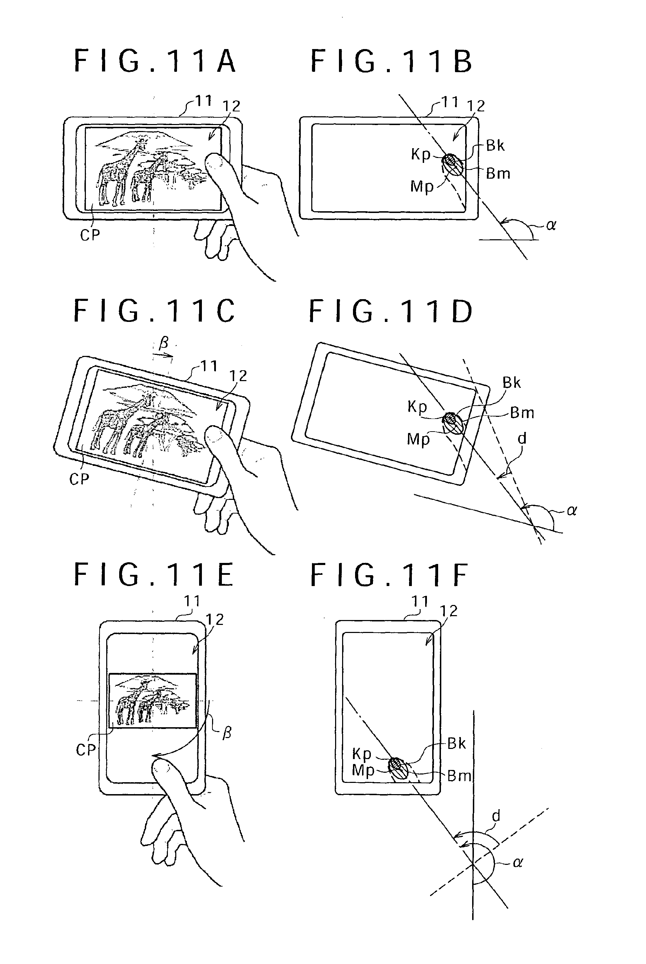

If an application, for example, for accessing images is started up, then the CPU 21 controls the touch panel 12 to display an image CP in accordance with a manner in which the housing 11 is utilized in a horizontally directed state, as seen in FIG. 11A.

Here, it is assumed that the user grasps the housing 11, for example, in the horizontally directed state and contacts with a right finger of the user the display face of the touch panel 12.

At this time, the CPU 21 carries out the ternary coding process described hereinabove based on the intensity of light received by the optical sensors 12B and detects a dark region Bk and an intermediate region Bm of the display face of the touch panel 12 as seen in FIG. 11B.

When the dark region Bk is detected, the CPU 21 recognizes that a physical solid contacts the display face of the touch panel 12.

Then, the CPU 21 detects the center Kp of gravity of the dark region Bk and the center Mp of gravity of the intermediate region Bm and calculates based on the detected centers Kp and Mp of gravity that the angle α of the contacting physical solid is, for example, 120 degrees. Then, the CPU 21 stores the angle α of the contacting physical solid and the center Kp of gravity of the dark region Bk into the nonvolatile memory 22.

In this manner, every time the CPU 21 recognizes that a physical solid contacts the display face of the touch panel 12, it detects the center Kp of gravity of the dark region Bk and the angle α of the contacting physical solid and stores the detected center Kp of gravity and angle α into the nonvolatile memory 22.

Then, the CPU 21 reads out the angle α of the contacting physical solid calculated in the preceding operation cycle and the angle α of the contacting physical solid calculated in the current operation cycle from the nonvolatile memory 22 and calculates the difference between them. Then, the CPU 21 decides based on a result of the calculation whether or not the angle α of the contacting physical solid has varied.

In the case illustrated in FIGS. 11A and 11B, it is assumed that the user has continued to contact with the right finger the display face of the touch panel 12 without changing the angle of the finger for a period of time after the angle α of the contacting physical solid is calculated in the preceding operation cycle until the angle α of the contacting physical solid is calculated in the present operation cycle. In this instance, since the angle α of the contacting physical solid calculated in the preceding operation cycle and the angle α of the contacting physical solid calculated in the current operation cycle are equal to each other and the difference between them is zero degree, the CPU 21 decides that the angle α of the contacting physical solid has not varied.

When the CPU 21 decides that the angle α of the contacting physical solid has not varied, it detects the angle α of the contacting physical solid again based on the intensity of light received by the optical sensors 12B and decides whether or not the angle α of the contacting physical solid has varied. The CPU 21 repeats the process described until the angle α of the contacting physical solid varies.

Here, it is assumed that the user inclines the housing 11, for example, by 30 degrees in the clockwise direction around the ball of the fingertip, that is, around the portion of the finger contacting the display face of the touch panel 12 as seen in FIG. 11C from the state illustrated in FIG. 11A.

At this time, the CPU 21 carries out the ternary coding process described hereinabove based on the intensity of light received by the optical sensors 12B and detects a dark region Bk and an intermediate region Bm of the display face of the touch panel 12 as seen in FIG. 11D. Then, the CPU 21 calculates the center Kp of gravity of the dark region Bk and the center Mp of gravity of the intermediate region Bm.

Then, the CPU 21 calculates based on the center Kp of gravity of the dark region Bk and the center Mp of gravity of the intermediate region Bm that the angle α of the contacting physical solid is, for example, 150 degrees, and stores the angle α of the contacting physical solid and the center Kp of gravity of the dark region Bk into the nonvolatile memory 22.

Then, the CPU 21 reads out the angle α of the contacting physical solid calculated in the preceding operation cycle (FIG. 11B), which is 120 degrees, and the angle α of the contacting physical solid calculated in the preceding operation cycle, which is 150 degrees, from the nonvolatile memory 22. Then, the CPU 21 decides that the difference between the angles α of the contacting physical solid is 30 degrees and decides that the angle α of the contacting physical solid has varied.

When the CPU 21 decides that the angle α of the contacting physical solid has varied, it decides whether or not the center Kp of gravity of the dark region Bk, that is, the center of gravity of the region in which the contacting solid contacts the display face of the touch panel 12, has moved. In particular, the CPU 21 reads out the distance between the center Kp of gravity detected in the preceding operation cycle and the center Kp of gravity detected in the current operation cycle from the nonvolatile memory 22 and calculates the distance between the two centers Kp of gravity, and then decides based on a result of the calculation whether or not the center Kp of gravity has move.

In the case shown in FIG. 11D, since the user has inclined the housing 11 around the center of gravity of the region of the display face of the touch panel 12 in which the finger contacts, the center of gravity of the region of the display face of the touch panel 12 in which the finger contacts has not moved from the state in the preceding operation cycle illustrated in FIG. 11B. Accordingly, the CPU 21 decides that the center Kp of gravity of the dark region Bk has not moved.

When the CPU 21 decides that the angle α of the contacting physical solid has varied and besides the center Kp of gravity of the dark region Bk has not moved, it recognizes that the housing 11 is not inclined.

On the other hand, if the CPU 21 decides that the angle α of the contacting physical solid has changed and besides the center Kp of gravity has moved, then it recognizes that the user has carried out an operation for varying the angle of the finger while the housing 11 is not inclined.

If the CPU 21 recognizes that the housing 11 has been inclined, then it decides whether or not the movement of the contacting physical solid stopped when the angle α of the contacting physical solid was calculated in the preceding operation cycle. In particular, the CPU 21 reads out the angle α of the contacting physical solid calculated in the preceding operation cycle and the angle α of the contacting physical solid calculated in the second preceding operation cycle from the nonvolatile memory 22. Then, the CPU 21 calculates the difference between the angles α and decides based on a result of the calculation whether or not the movement of the contacting physical solid stopped when the angle α of the contacting physical solid was calculated in the preceding cycle.

In the case illustrated in FIG. 11D, since the difference between the angle α of the contacting physical solid in the preceding operation cycle illustrated in FIG. 11B and the angle α of the contacting physical solid calculated in the second preceding operation cycle is zero degree, the CPU 21 decides that the movement of the contacting physical solid stopped when the angle α of the contacting physical solid in the preceding operation cycle was calculated.

When the CPU 21 decides that the movement of the contacting physical solid stopped when the angle α of the contacting physical solid was calculated in the preceding operation cycle, the CPU 21 recognizes that the time in this instance is a point of time at which the user began to vary the angle of the finger, that is, the user began to incline the housing 11. Then, the CPU 21 sets the angle α of the contacting physical solid calculated in the preceding operation cycle, that is, 120 degrees, as the starting angle.

Then, the CPU 21 calculates the difference d between the starting angle and the angle α of the contacting physical solid calculated in the current operation cycle and detects the difference d as the inclination β of the housing 11. In the case illustrated in FIG. 11D, since the starting angle is 120 degrees and the angle α of the finger calculated in the current operation cycle is 150 degrees, the CPU 21 calculates that the difference d is 30 degrees and thus detects the inclination β of the housing 11 as 30 degrees.

Then, the CPU 21 decides whether or not the absolute value of the inclination β of the housing 11 is greater than 90 degrees. In the case illustrated in FIG. 11D, since the inclination β of the housing 11 is 30 degrees, the CPU 21 decides that the absolute value of the inclination β of the housing 11 is not greater than 90 degrees.

When the CPU 21 decides that the absolute value of the inclination β of the housing 11 is not greater than 90 degrees, it does not carry out a process in accordance with the inclination β of the housing 11, but carries out the process described hereinabove again to detect the inclination β of the housing 11.

Here, it is assumed that, for example, the user further inclines the housing 11 around the region of the display screen of the touch panel 12 in which the finger contacts from the state illustrated in FIG. 11C until the housing 11 is placed into a vertically directed state as seen in FIG. 11E.

At this time, the CPU 21 carries out the ternary coding process described hereinabove based on the intensity of light received by the optical sensors 12B and detects a dark region Bk and an intermediate region Bm of the display screen of the touch panel 12 as seen in FIG. 11F. Then, the CPU 21 calculates that the angle α of the contacting physical solid is, for example, 210 degrees as described hereinabove and stores the angle α of the contacting physical solid and the center Kp of gravity of the dark region Bk into the nonvolatile memory 22.

Then, the CPU 21 calculates that the difference between the angle α of the contacting physical solid calculated in the preceding operation cycle illustrated in FIG. 11D, which is 150 degrees, and the angle α of the contacting physical solid calculated in the current operation cycle, which is 210 degrees, is 60 degrees. The CPU 21 thus decides that the angle α of the contacting physical solid has varied.

Then, when the CPU 21 decides that the angle α of the contacting physical solid has varied, it decides whether or not the center Kp of gravity has moved. In the case illustrated in FIG. 11F, the CPU 21 decides based on the center Kp of gravity calculated in the preceding operation cycle and the center Kp of gravity calculated in the current operation cycle that the center Kp of gravity has not moved.

Then, when the CPU 21 decides that the center Kp of gravity has not moved, it decides whether or not the movement of the contacting physical solid stopped when it calculated the angle α of the contacting physical solid in the preceding operation cycle. In the case illustrated in FIG. 11F, the CPU 21 calculates that the difference between the angle α of the contacting physical solid calculated in the preceding operation cycle, which is 150 degrees, and the angle α of the contacting physical solid calculated in the second preceding operation cycle, which is 120 degrees, is 30 degrees. Thus, the CPU 21 decides that, when it calculated the angle α of the contacting physical solid in the preceding operation cycle, the contacting physical solid was moving.

When the CPU 21 decides that, when it calculated the angle α of the contacting physical solid in the preceding operation cycle, the contacting physical solid was moving, it recognizes that the user is currently inclining the housing 11 and a starting angle has already been set. Then, the CPU 21 calculates that the starting angle, which is 120 degrees, and the angle α of the contacting physical solid calculated in the present operation cycle, which is 210 degrees, is 90 degrees. Thus, the CPU 21 detects that the inclination β of the housing 11 is 90 degrees.

Then, when the CPU 21 decides that the absolute value of the inclination β of the housing 11 is higher than 90 degrees, it recognizes that the housing 11 is grasped in a vertically directed state by the user and rotates the image CP by 90 degrees in accordance with the inclination β of the housing 11.

In particular, when the inclination β is 90 degrees, since the housing 11 is inclined in the clockwise direction, the CPU 21 rotates the image CP by 90 degrees in the counterclockwise direction as seen in FIG. 11E. On the other hand, if the inclination β is -90 degrees, then since the housing 11 is inclined in the counterclockwise direction, the CPU 21 rotates the image CP by 90 degrees in the clockwise direction.

Consequently, even if the user inclines the housing 11 until it is placed into a vertically directed state, the CPU 21 can cause the image CP to be displayed in accordance with the horizontally directed state, and consequently, the user can access the image CP readily.

It is to be noted that, when the image CP is rotated, the CPU 21 controls the touch panel 12 to display the image CP in a reduced scale so that the image CP may fit in the display screen of the touch panel 12.

In the manner, the CPU 21 can detect the inclination β and execute a predetermined process in accordance with the inclination β.

### [2-2. Inclination Detection Processing Procedure]

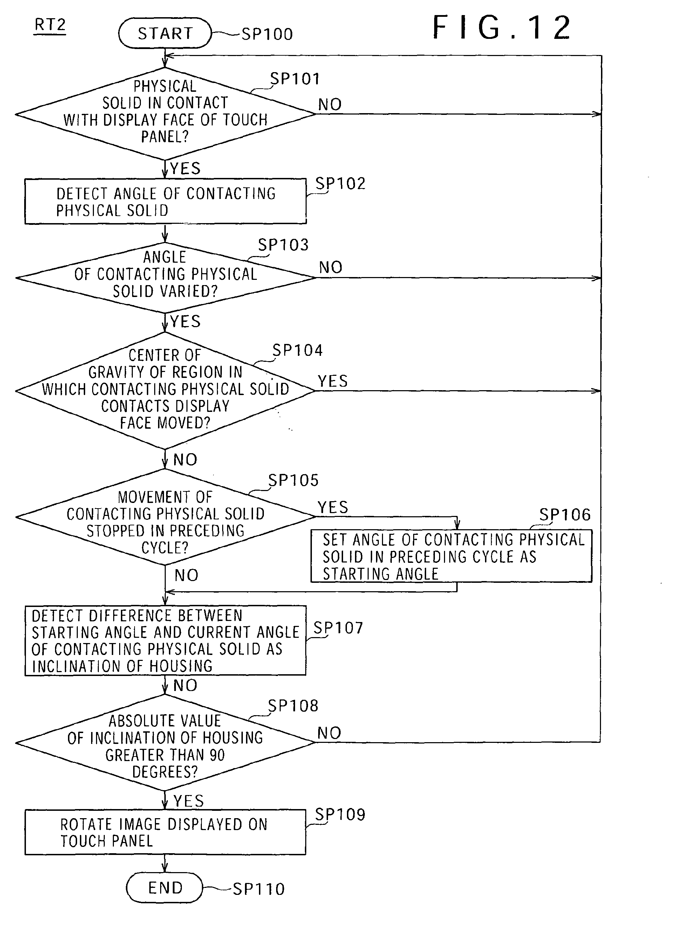

Now, an operation processing procedure (hereinafter referred to also as inclination detection processing procedure) RT2 in the inclination detection process by the information processing apparatus 10 is described in detail with reference to a flow chart shown in FIG. 12. It is to be noted that the inclination detection processing procedure RT2 is executed by the CPU 21 in accordance with a program installed in the nonvolatile memory 22.

If an application is started up, then the CPU 21 starts the inclination detection processing procedure RT2 beginning with step SP100 and advances its processing to next step SP101.

At step SP101, the CPU 21 detects a dark region Bk and an intermediate region Bm on the display face of the touch panel 12 based on the intensity of light received by the optical sensors 12B. Then, the CPU 21 decides whether or not a physical solid contacts the display face of the touch panel 12 based on a result of the detection.

If a negative result is obtained at step SP101, then this signifies that a finger of the user is not in contact with the display face of the touch panel 12. At this time, the CPU 21 returns the processing to step SP101 to stand by until a physical solid contacts the display face of the touch panel 12.

On the other hand, if an affirmative result is obtained at step SP101, then this signifies that α finger of the user is in contact with the display face of the touch panel 12, and the CPU 21 advances the processing to step SP102.

At step SP102, the CPU 21 detects the center Kp of gravity of the dark region Bk and the center Mp of gravity of the intermediate region Bm. Then, the CPU 21 calculates the angle α of the contacting physical solid based on the center Kp of gravity of the dark region Bk and the center Mp of gravity of the intermediate region Bm and advances the processing to step SP103.

At step SP103, the CPU 21 calculates the difference between the angle α of the contacting physical solid calculated in the preceding operation cycle and the angle α of the contacting physical solid calculated in the current operation cycle and decides based on a result of the calculation whether or not the angle α of the contacting physical solid has varied.

If a negative result is obtained at step SP103, then this signifies that the user has not varied the angle of the finger and has not inclined the housing 11. At this time, the CPU 21 returns the processing to step SP101 to stand by again until a physical solid contacts the display face of the touch panel 12.

On the other hand, if an affirmative result is obtained at step SP103, then this signifies that the user has varied the angle of the finger. At this time, the CPU 21 advances the processing to step SP104.

At step SP104, the CPU 21 calculates the distance between the center Kp of gravity of the dark region Bk detected in the preceding operation cycle and the center Kp of gravity of the dark region Bk detected in the current operation cycle and decides whether or not the center of gravity of the region in which the contacting physical solid contacts with the display face of the touch panel 12 has moved based on a result of the calculation.

If a negative result is obtained at step SP104, then this signifies that, while the user has varied the angle of the finger, the housing 11 has not been inclined. At this time, the CPU 21 returns the processing to step SP101 to stand by again until a physical solid contacts the display face of the touch panel 12.

On the other hand, if an affirmative result is obtained at step SP104, then this signifies that the user has inclined the housing 11. At this time, the CPU 21 advances the processing to step SP105.

At step SP105, the CPU 21 calculates the difference between the angle α of the contacting physical solid calculated in the second preceding operation cycle and the angle α of the contacting physical solid calculated in the preceding operation cycle and decides based on a result of the calculation whether or not movement of the contacting physical solid stopped when the angle α of the contacting physical solid was calculated in the preceding operation cycle.

If an affirmative result is obtained at step SP105, then this signifies that the timing at which the angle α of the contacting physical solid was calculated in the preceding operation cycle was a point of time at which the user started to incline the housing 11. At this time, the CPU 21 advances the processing to step SP106.

At step SP106, the CPU 21 sets the angle α of the contacting physical solid in the preceding operation cycle as a starting angle and advances the processing to step SP107.

On the other hand, if a negative result is obtained at step SP105, then this signifies that the user inclined the housing 11 already when the angle α of the contacting physical solid was calculated in the preceding operation cycle and the starting angle is set already. At this time, the CPU 21 advances the processing to step SP107.

At step SP107, the CPU 21 calculates the difference d between the starting angle and the angle α of the contacting physical solid in the current operation cycle and detects the difference d as the inclination β of the housing 11 and then advances the processing to step SP108.

At step SP108, the CPU 21 decides whether or not the absolute value of the inclination β of the housing 11 is greater than 90 degrees.

If a negative result is obtained at step SP108, then this signifies that the housing 11 is grasped in a horizontally directed state by the user. At this time, the CPU 21 returns the processing to step SP101 to stand by again until a physical solid contacts the display face of the touch panel 12.

On the other hand, if an affirmative result is obtained at step SP108, then this signifies that the housing 11 is grasped in a vertically directed state by the user. At this time, the CPU 21 advances the processing to step SP109.

At step SP109, the CPU 21 rotates an image CP displayed on the touch panel 12 in a clockwise direction or a counterclockwise direction by 90 degrees in accordance with the inclination β and advances the processing to step SP110, at which it ends the inclination detection processing procedure RT2.

The CPU 21 detects the inclination of the housing 11 in accordance with such an inclination detection processing procedure RT2 as described above.

### [2-3. Operation and Effect of the Second Embodiment]

In the configuration described above, the information processing apparatus 10 detects an angle α of a contacting physical solid on the display face based on the shape of the contacting physical solid every time the shape of the physical solid contacting with the display face of the touch panel 12 is recognized.

Then, the information processing apparatus 10 compares the angle α of the contacting physical solid detected in the preceding operation cycle and the angle α of the contacting physical solid detected in the current operation cycle. Then, if it is decided that the angle α of the contacting physical solid has varied, then the information processing apparatus 10 decides whether or not movement of the contacting physical solid stopped when the angle α of the contacting physical solid was detected.

Then, if it is decided that the movement of the contacting physical solid stopped when the angle α of the contacting physical solid was detected in the preceding operation cycle, then it is recognized by the information processing apparatus 10 that the point of time described is a point of time at which the user started to incline the housing 11, and the variation of the angle α of the contacting physical solid is detected with reference to the angle α of the contacting physical solid at the point of time.

Consequently, the information processing apparatus 10 can detect the variation of the angle of the finger grasping the housing 11 from the point of time at which the user started to incline the housing 11.

As a result, the information processing apparatus 10 can detect the inclination β of the housing 11 accurately based on the variation of the angle of the finger grasping the housing 11 which varies in response to inclination of the housing 11 also where the user grasps the housing 11 by one hand.

Further, the information processing apparatus 10 detects the center of gravity of the region in which the contacting physical solid contacts the display face of the touch panel 12 based on the shape of the contacting physical solid and decides whether or not the center of gravity has moved together with the variation of the angle α of the contacting physical solid.

Then, when the information processing apparatus 10 decides that the center of gravity has not moved together with the variation of the angle α of the contacting physical solid, it recognizes that the housing 11 is inclined, and detects the inclination β based on the variation of the angle α of the contacting physical solid.

Consequently, also where the user grasps the housing 11 by one hand, when the user carries out an operation of varying the angle of its finger without inclining the housing 11, the information processing apparatus 10 can be prevented from recognizing in error that the housing 11 is inclined.

It is to be noted that the functional configuration of the information processing apparatus 10 in the second embodiment is similar to that of the information processing apparatus of the first embodiment described hereinabove with reference to FIG. 10 except that it does not include the control section 36. In other words, the information processing apparatus 10 in the second embodiment functions as the recognition section 31, the angle detection section 32, the gravity center detection section 33, the decision section 34 and the inclination detection section 35.

### <3. Additional Embodiments>

### [3-1. Additional Embodiment 1]

It is to be noted that, in the first embodiment described hereinabove, the CPU 21 detects the variation of the angle αL of the left region contacting physical solid and the variation of the angle αR of the right region contacting physical solid and detects a greater one of the variations as the inclination β of the housing 11.

However, the CPU 21 may detect the variation of the angle αL of the left region contacting physical solid and the variation of the angle αR of the right region contacting physical solid and use various other methods to detect the inclination β of the housing 11 based on the detected variations.

For example, the CPU 21 may calculate an average value of the variation of the angle αL of the left region contacting physical solid and the variation of the angle αR of the right region contacting physical solid and detect the average value as the inclination β of the housing 11.

Or, for example, the CPU 21 may detect the variation in angle of that one of the left region contacting physical solid and the right region contacting physical solid with regard to which the distance of movement of the center of gravity of the region in which a finger contacts the display face of the touch panel 12 is shorter as the inclination β of the housing 11.

This is because that finger with regard to which the distance of movement of the center of gravity of the region in which the finger contacts the display face of the touch panel 12 is shorter provides the center of rotation when the housing 11 is inclined and the variation of the corresponding angle reflects the variation of the inclination of the housing 11 comparatively accurately.

Alternatively, the CPU 21 may detect the variation in angle of, for example, that one of the left region contacting physical solid and the right region contacting physical solid with regard to which the area of the region in which the finger contacts the display face of the touch panel 12 is smaller as the inclination β of the housing 11.

This is because the finger which contacts over a greater area grasps the housing 11 comparatively strongly and, even if the housing 11 is inclined, the variation in angle is smaller and therefore the variation of the inclination of the housing 11 is less liable to be reflected.

However, the CPU 21 may alternatively recognize three or more contacting solids, detect the angle α of each contacting physical solid and detect that angle α of the contacting physical solid which exhibits the greatest variation as the inclination β of the housing 11.

### [3-2. Additional Embodiment 2]

Further, in the first embodiment described hereinabove, if the CPU 21 decides that a physical solid contacts each of the opposite left and right regions of the display face of the touch panel 12, then it changes the operation mode of the information processing apparatus 10 into the inclination detection mode, in which it detects the inclination β of the housing 11.

However, when the CPU 21 detects that a plurality of physical solids contact the display face of the touch panel 12 irrespective of whether the touched locations are the opposite left and right regions of the display face, the CPU 21 may change over the operation mode of the information processing apparatus 10 to the inclination detection mode, in which it detects the inclination β of the housing 11.

Or, when the CPU 21 decides that a predetermined operation is carried out for the display face of the touch panel 12, for example, an operation of moving a contacting physical solid in such a manner as to draw a circle is carried out, it may change over the operation mode of the information processing apparatus 10 to the inclination detection mode, in which it detects the inclination β of the housing 11.

### [3-3. Additional Embodiment 3]

Further, in the first and second embodiments described hereinabove, the CPU 21 executes various processes such as adjustment of the sound volume, changeover of a selected album, fast forward and reverse reproduction of dynamic pictures, scrolling of images and rotation of an image in accordance with the inclination β.

However, the CPU 21 may additionally execute various other processes such as chapter forward selection and chapter reverse selection of dynamic pictures, a game which utilizes the inclination and so forth in accordance with the inclination β.

In the first embodiment described hereinabove, the CPU 21 adjusts the degree by which various processes are to be carried out, for example, by changing the amount of adjustment of the sound volume in response to the absolute value of the inclination β.

However, the CPU 21 may execute various processes depending upon whether the inclination β is in the positive or negative irrespective of the absolute value of the inclination β such as to raise the sound volume by a predetermined amount when the inclination β is in the positive but lower the sound volume by a predetermined amount when the inclination β is in the negative.

### [3-4. Additional Embodiment 4]

Further, in the first and second embodiments described hereinabove, the CPU 21 detects the inclination β of the housing 11 where the center of gravity of the region in which a contacting physical solid contacts the display face of the touch panel 12 even if the angle α of the contacting physical solid varies.

However, the CPU 21 may detect the inclination β of the housing 11 otherwise if the angle α of the contacting physical solid varies irrespective of whether or not the center of gravity of the region in which the contacting physical solid contacts the display face of the touch panel 12.

### [3-5. Additional Embodiment 5]

Further, in the first and second embodiments described hereinabove, the CPU 21 detects the angle α of a contacting physical solid based on the center of gravity of a region in which the contacting physical solid contacts the display face of the touch panel 12 and the center of gravity in another region in which the contacting physical solid is positioned in the proximity of the display face.

However, the CPU 21 may detect the angle α of the contacting physical solid alternatively by various other methods. For example, the CPU 21 may recognize the shape of a region in which the contacting physical solid contacts the display face of the touch panel 12, detect a rectangle which surrounds the shape of the region and has the smallest area, and detect the angle α of the contacting physical solid from the angle of the rectangle on the display face.

### [3-6. Additional Embodiment 6]

Further, in the first and second embodiments described hereinabove, the touch panel 12 of the optical sensor type is used. However, a touch panel of any other type such as, for example, a touch panel of the capacitance type may be used only if it can recognize the shape of a physical solid which contacts the display face of the touch panel 12.

### [3-7. Additional Embodiment 7]

Further, in the first and second embodiments described hereinabove, the touch panel 12 provided on the surface of the housing 11 is used. However, a touch panel provided on the rear face of the housing 11 may be used alternatively.

In this instance, the CPU 21 detects the inclination of the housing 11 in response to a variation of the angle of a physical solid which contacts the touch panel provided on the rear face of the housing 11. Consequently, since also the angle of a finger contacting the rear face of the housing 11 varies in response to inclination of the housing 11, the inclination β of the housing 11 can be detected based on this angle.

Alternatively, for example, a touch panel for exclusive use for ordinary touching operation having a display section may be provided on the surface of the housing 11 while another touch panel for inclination detection which does not have a display section is provided on the rear face of the housing 11.

Consequently, when the user varies the angle of a finger without inclining the housing 11, the CPU 21 can be prevented from recognizing in error that the housing 11 is inclined. This is because, when the user varies the angle of a finger without inclining the housing 11, although the user varies the angle of the finger contacting the surface of the housing 11, which is the face for which an ordinary touching operation is to be carried out, it is estimated that the user does not vary the angle of the finger contacting the rear face of the housing 11.

### [3-8. Additional Embodiment 8]

Further, in the first and second embodiments described hereinabove, the program for executing the inclination detection process is stored in the nonvolatile memory 22.

However, the program just above may otherwise be recorded on a predetermined recording medium such as, for example, a CD (Compact Disc) such that the CPU 21 reads out the program from the recording medium and executes the same. Alternatively, the CPU 21 may download the program from a predetermined server on the Internet and install the program into the nonvolatile memory 22.

### [3-9. Additional Embodiment 9]

Further, in the first and second embodiments, the information processing apparatus 10 as an information processing apparatus includes the optical sensors 12B as the recognition section 31, recognition section 31, angle detection section 32, gravity center detection section 33, decision section 34, inclination detection section 35 and CPU 21 as the control section 36.

However, the functioning sections described above may be configured from various types of hardware or software if similar functions are achieved. For example, each of the recognition section 31, angle detection section 32, gravity center detection section 33, decision section 34, inclination detection section 35 and control section 36 may be implemented from a separate piece of hardware.

Further, the present invention may be applied to various outer information processing apparatus such as a portable audio player, a PDA (Personal Digital Assistant) and a portable telephone set only if they have a similar configuration.

### [3-10. Additional Embodiment 10]

Further, the present invention is not limited to the first and second embodiments described hereinabove nor to the additional embodiments 1 to 9. In other words, the present invention is applied to those forms which include arbitrary combinations of some or all of the first and second embodiments described hereinabove and the additional embodiments 1 to 9 described above or those forms which include arbitrary elements extracted from the embodiments mentioned.

For example, the first embodiment and the second embodiment described hereinabove may be combined. In this instance, when the CPU 21 recognizes that one physical solid contacts the touch panel 12, it may detect the inclination β of the housing 11 by the inclination detection process according to the second embodiment, but when the CPU 21 recognizes that two physical solids contact the touch panel 12, it may detect the inclination β of the housing 11 by the inclination detection process according to the first embodiment.

The information processing apparatus, inclination detection method and inclination detection program of embodiments of the present invention can be applied to various information processes such as, for example, a portable audio player, a PDA and a portable telephone set.

The present application contains subject matter related to that disclosed in Japanese Priority Patent Application JP 2009-100171 filed in the Japan Patent Office on April 16, 2009.

While embodiments have been described using specific terms, such description is for illustrative purpose only, and it is to be understood that changes and variations may be made without departing from the spirit or scope of the following claims.
1. Apparatus for use in an inclinable device, the device comprising:
   a detector for determining an area of contact on a surface of the device by an object external to the device;
   a memory storing instructions for determining a change in inclination of the device, based on the area of contact; and
   one or more processors for executing the instructions; wherein:
      the instructions include instructions for determining a change in an angle of the object based on the area of contact; and
      the change in the inclination of the device is determined based on the change in the angle; wherein:
      the instructions include instructions for determining an area of the smallest rectangle that surrounds the area of contact; and
      the angle is determined based on the rectangle;
         wherein:
      the instructions include instructions for determining an area of the smallest rectangle that surrounds the area of contact; and
      the angle is determined based on the rectangle.
2. A method for determining a change in inclination of a device, the method comprising:
   determining an area of contact on a surface of the device by an object external to the device; and
   determining the change in the inclination of the device based on the area of contact.
3. The method of clause 2, further comprising generating, by the device, a signal representing the change in the inclination of the device.
4. The method of clause 2, further comprising:
   determining a change in an angle of the object based on the area of contact,
   wherein the change in the inclination of the device is determined based on the change in the angle.
5. The method of clause 4 further comprising:
   determining a centroid of the area of contact,
   wherein determining the change in the angle comprises determining a change in angle based on the centroid.
6. The method of clause 4, wherein:
   the change in the angle is determined based on a starting angle of the object and a current angle of the object; and
   the starting angle is reset when it is determined that the centroid has moved.
7. The method of clause 2, wherein the contact is a physical contact.
8. The method of clause 2 wherein:
   the area of contact comprises a first area of contact;
   the area of physical contact is associated with a first portion of the object;
   the method further comprises:
      determining a second area of contact on the surface, the second area of contact being associated with a second portion of the object,
   and
      determining an angle of the object based on the first area of contact and the second area of contact; and
      the change in the inclination of the device is determined based on the determined angle.
9. The method of clause 8, wherein the second area of contact represents a shadow of the object.
10. The method of clause 2 wherein:
   the area of contact is in a first region of the surface;
   the object is a first object; and
   the method further comprises:
      determining an area of contact on a second region of the surface by a second object external to the device.
11. The method of clause 10 the method further comprising:
   storing a starting angle for the first object;
   storing a starting angle for the second object;
   determining a change in one of the starting angle of the first object or the starting angle of the second object; and
   determining a larger of:
      (1) a difference between the starting angle of the first object and a current angle of the first object, or
      (2) a difference between the starting angle of the second object and a current angle of the second object,
         wherein the change in the inclination of the device is determined based on the larger of the difference for the first object and the difference for the second object.
12. The method of clause 11 further comprising:
   storing a starting centroid of the area of contact of the first object;
   storing a starting centroid of the area of contact of the second object,
   wherein determining the change in the starting angle of the first object or the starting angle of the second object comprises determining if at least one of the starting centroid of the area of contact of the first object or the starting centroid of the area of contact of the second object has moved; and when a move is determined:
      updating at least one of the starting angle of the first object or the starting angle of the second object, and
      updating at least one of the starting centroid of the first object or the starting centroid of the second object.

## Claims

1. Apparatus for use in an inclinable device, the device comprising:
a detector for determining an area of contact
on a surface of the device by an object external to the device;
a memory storing instructions for determining a
change in inclination of the device, based on the area of contact; and
one or more processors for executing the
instructions.

2. The apparatus of claim 1, wherein the instructions include instructions for generating a signal representing the change in the inclination of the device.

3. The apparatus of claim 1, wherein:
the instructions include instructions for
determining a change in an angle of the object based on the area of contact; and the change in the inclination of the device is
determined based on the change in the angle.

4. The apparatus of claim 3 wherein:
the instructions include instructions for
determining a centroid of the area of contact; and
determining the change in the angle comprises
determining a change in angle based on the centroid.

5. The apparatus of claim 3, wherein:
the change in the angle is determined based on
a starting angle of the object and a current angle of the object; and the instructions include instructions for
resetting the starting angle when it is determined that a centroid of the area of contact has moved.

6. The apparatus of claim 1, wherein the contact is a physical contact.

7. The apparatus of claim 1 wherein:
the area of contact comprises a first area of
contact;
the area of contact is associated with a first
portion of the object;
the detector determines a second area of
contact on the surface, associated with a second portion of the object;
the instructions include instructions for
determining an angle of the object based on the first area of contact and the second area of contact; and
the change in the inclination of the device is
determined based on the determined angle.

8. The apparatus of claim 7, wherein the second area of contact represents a shadow of the object.

9. The apparatus of claim 1 wherein:
the area of contact is in a first region of the
surface;
the object is a first object; and
the instructions include instructions for
determining an area of contact on a second region of the surface by a second object external to the device.

10. The apparatus of claim 9 wherein:
the memory stores a starting angle of the first
object;
the memory stores a starting angle of the
second object;
the instructions include instructions for
determining a change in at least one of the starting angle of the first object or the starting angle of the second object; and
the instructions include instructions for
determining a larger of:
(1) a difference between the starting angle of the first object and a current angle of the first object, or
(2) a difference between the starting angle of the second object and a current angle of the second object;
wherein the change in the inclination of the
device is determined based on the larger of the difference for the first object and the difference for the second object.

11. The apparatus of claim 10 wherein:
the memory stores a starting centroid of the
area of contact of the first object;
the memory stores a starting centroid for the
area of contact of the second object;
determining the change in the starting angle of
the first object or the starting angle of the second object comprises determining if at least one of the starting centroid of the area of contact of the first object or the starting centroid of the area of contact of the second object has moved; and
the instructions include instructions for, when
a move is determined, updating at least one of the starting angle of the first object or the starting angle of the second object, and updating at least one of the starting centroid of the first object or the starting centroid of the second object.

12. The apparatus of claim 1, wherein the area of contact is detected based on at least one of capacitance, light, pressure, or temperature.

13. The apparatus of claim 1, wherein the object is a finger.

14. A method for determining a change in inclination of a device, the method comprising:
determining an area of contact on a surface of
the device by an object external to the device; and
determining the change in the inclination of
the device based on the area of contact.

15. A non-transitory computer-readable storage medium storing a set of instructions which, when executed by a processor, perform a method comprising:
determining an area of contact on a surface of
a device by an object external to the device; and
determining a change in the inclination of the
device based on the area of contact.
